Europäisches Patentamt

European Patent Office

Office européen des brevets

(19)

(11) Veröffentlichungsnummer: **0 137 300**
**B1**

(12) **EUROPÄISCHE PATENTSCHRIFT**

(45) Veröffentlichungstag der Patentschrift: **27.06.90**

(51) Int. Cl.⁵: **B 60 L 13/02, H 02 K 41/00**

(21) Anmeldenummer: **84110520.8**

(22) Anmeldetag: **04.09.84**

(54) **Elektromagnetischer Linearantrieb.**

(30) Priorität: **05.09.83 DE 3331950**

(43) Veröffentlichungstag der Anmeldung:
**17.04.85 Patentblatt 85/16**

(45) Bekanntmachung des Hinweises auf die
Patenterteilung:
**27.06.90 Patentblatt 90/26**

(84) Benannte Vertragsstaaten:
**AT BE CH DE FR GB IT LI**

(56) Entgegenhaltungen:
**EP-A-0 068 328**
**DE-A-2 805 994**
**DE-A-3 042 497**
**DE-A-3 331 952**

(73) Patentinhaber: **Magnetbahn GmbH**
**Emslanderstrasse 3**
**D-8130 Starnberg (DE)**

(72) Erfinder: **Heidelberg, Götz, Dipl.-Phys.**
**Am Hügel 16**
**D-8130 Starnberg-Percha (DE)**
Erfinder: **Gründl, Andreas, Dr.**
**Haseneystrasse 20**
**D-8000 München 70 (DE)**
Erfinder: **Rosner, Peter, Dr.**
**Waltherstrasse 16**
**D-8000 München 2 (DE)**

(74) Vertreter: **Vogl, Leo, Dipl.-Ing.**
**AEG Aktiengesellschaft Theodor-Stern-Kai 1**
**D-6000 Frankfurt am Main 70 (DE)**

EP 0 137 300 B1

## Beschreibung

Die Erfindung betrifft einen elektromagnetischen Linearantrieb gemäß Oberbegriff des Patentanspruchs 1.

Ein derartiger elektromagnetischer Linearantrieb ist aus der DE—A—28 05 994 bekannt. Dabei erfolgt die Unterteilung des Stators in eine Anzahl Motorelemente, um nicht alle Stromleiter des den Fahrweg bildenden Stators gleichzeitig mit Energie versorgen zu müssen, was einerseits zu relativ hohen Leistungsverlusten führen würde und andererseits zu Bauelementen, die für sehr hohe Leistung ausgelegt sein müßten. Aus der eigenen DE—A—30 42 497 ist es bekannt, die Ein- und Ausschaltung der einzelnen Motorelemente mit Hilfe von Sensor-Einrichtungen zu bewirken, die längs des Fahrwegs angeordnet und durch das Fahrzeug beeinflußbar sind. Auf diese Weise wird erreicht, daß das Fahrzeug selbst das Ein- und Ausschalten der einzelnen Statorabschnitte steuert.

Üblicherweise ordnet man längs einer Fahrstrecke zwei nebeneinanderliegende Fahrwege für entgegengesetzte Fahrrichtungen an. Für diesen Fall ist es aus der DE—A—28 05 994 zur Verringerung der Anzahl der für den elektromagnetischen Linearantrieb benötigten Energiezuführeinheiten bekannt, jede Energiezuführeinheit einem Motorelement des einen und dem gegenüberliegenden Motorelement des anderen Fahrwegs zuzuordnen und bedarfsweise an das Motorelement des einen oder an das Motorelement des anderen Fahrwegs anzuschalten.

Für den Fall, daß sich nun bei einer Fahrzeugbegegnung über beiden einer Energiezuführeinheit zugeordneten Motorelementen je ein Fahrzeug befindet, wird das eine dieser Motorelemente an die zugehörige Energiezuführeinheit angeschaltet, während das andere dieser beiden Motorelemente von einer benachbarten Energiezuführeinheit versorgt wird. Dies führt allerdings dazu, daß im Fall der Fahrzeugbegegnung die Energie für das eine Motorelement über eine größere Strecke herangeführt werden muß und daß sich außerdem der Steueraufwand für einen derartigen elektromagnetischen Linearantrieb beträchtlich erhöht. Es reicht nämlich nicht mehr aus, daß die einzelnen Energiezuführeinheiten einzig und allein für die Energiebedürfnisse der beiden je zugehörigen Motorelemente konzipiert sein müssen, sondern sie müssen auch für die möglicherweise unterschiedlichen Energiebedürfnisse benachbarter Motorelemente ausgelegt sein. Die Selbststeuerung der in der bereits erwähnten DE—A—30 42 497 angegebenen Art, nämlich mittels längs des Fahrwegs angeordneten und durch das Fahrzeug beeinflußbaren Sensoreinrichtungen eine vom Fahrzeug selbst gesteuerte Ein- und Ausschaltung der einzelnen Motorelemente vorzunehmen, erfordert bei dieser bekannten Methode eine Verknüpfung einer jeden Energiezuführeinheit nicht nur mit Sensoreinrichtungen der benachbarten Motorelemente sondern mindestens noch mit den jeweils übernächsten Motorelementen, um in gewünschter Weise eine vom Fahrzeug selbst gesteuerte Fahrzeugübergabe auf benachbarte Motorelemente durchführen zu können.

Der Erfindung liegt die Aufgabe zugrunde, bei einem elektromagnetischen Linearantrieb mit zwei nebeneinanderliegenden Fahrwegen für entgegengesetzte Fahrrichtungen das Problem der Fahrzeugbegegnung auf einfachere Weise und mit geringerem Bauelemente-, Schaltungs- und Steuerungsaufwand und somit mit geringerem Kostenaufwand zu lösen.

Die prinzipielle Lösung dieser Aufgabe besteht darin, jede Einheit aus Energiezuführeinheit und zugehörigen Motorelementen auch im Fall der Fahrzeugbegegnung autark zu betreiben, so daß sie nicht von der Energiezufuhr von Energiezuführeinheiten abhängt, die anderen Motorelementen zugeordnet sind.

Verschiedene Realisierungsmöglichkeiten für dieses Lösungsprinzip sind in den Ansprüchen 1, und 5 angegeben. Vorteilhafte Weiterbildungen zeigen die weiteren Ansprüche auf.

Da man bei einem erfindungsgemäß gestalteten elektromagnetischen Linearantrieb auch im Fall der Fahrzeugbegegnung nicht auf die Energieversorgung durch andere Energiezuführeinheiten zurückzugreifen braucht, ist kein lediglich für die Fälle der Zugbegegnungen nützlicher Zusatzaufwand für eine schaltungs- und steuerungsmäßige Verknüpfung mit anderen Energiezuführeinheiten und diesen zugeordneten Motorelementen erforderlich.

Für den Fall, daß sich über beiden einer Energiezuführeinheit zugeordneten Motorelementen je ein Fahrzeug befindet, kann man sich also folgender Möglichkeiten bedienen:

1. Für jedes einer gemeinsamen Energiezuführeinheit zugeordnete Motorelementepaar wird ein Motorelement vorbestimmt, an das die Energiezuführeinheit in diesem Fall angeschaltet ist. Das jeweils andere Motorelement des Motorelementpaars bleibt während dieser Zeit leistungsmäßig unversorgt.

2. Beide Motorelemente dieses Motorelementepaars werden abwechselnd an die Leistungszuführeinheit angeschaltet.

3. In jedem Motorelement wird die Abweichung der Istgeschwindigkeit des sich über das Motorelement bewegenden Fahrzeugs von der momentanen Sollgeschwindigkeit ermittelt. Die Leistungszuführeinheit wird jeweils an dasjenige Motorelement angeschaltet, für das eine größere Abweichung von der Sollgeschwindigkeit ermittelt wird.

4. Es wird keines der beiden Motorelemente eines solchen Motorelementepaars an die Leistungszuführeinheit angeschaltet, so daß beide Motorelemente passiv bleiben und den über sich bewegenden Fahrzeugen keinen Schub vermitteln.

Die Erfindungsgemäße Lösung ist besonders vorteilhaft bei einem elektromagnetischen Linearantrieb, bei dem alle Motorelemente für die gleiche Maximalleistung ausgelegt sind, wie dies in der nicht vorveröffentlichten DE—A—33 31 953 der Anmelderin ausführlich erläutert ist. Bei einem solchen Linearantrieb mit Konstantleistungs-Motorelement kann man nicht nur sämtliche Leistungszuführeinheiten für die gleiche Maximalleistung auslegen, so daß man entlang der gesamten Fahrstrecke lauter identische Leistungszuführeinheiten verwenden kann, sondern das Anschalten einer gemeinsamen Leistungssteuerungseinheit an das eine oder das andere Motorelement eines Motorelementepaars mit je gleicher Maximalleistung ist viel einfacher als bei einem Motorelementepaar mit Motorelementen, die für verschiedene Maximalleistung ausgelegt sind.

Besonders vorteilhaft ist die erfindungsgemäße Lösung auch bei einem elektromagnetischen Linearantrieb, wie er in der nicht vorveröffentlichten DE—A—33 31 952 der Anmelderin offenbart ist, bei dem entsprechend der Auswahl aus einer Vielzahl von vorgegebenen Fahrprofilen für die Fahrstrecke Fahrprogrammnummern für die einzelnen Motorelemente, die in den einzelnen Motorelementen zugeordneten Fahrprogrammspeichern gespeichert sind, aufgerufen werden können. Die gemeinsame Leistungszuführeinheit eines Motorelementepaars wird dann je nachdem, ob sie an das eine oder das andere Motorelement angeschaltet ist, für eine Leistungsabgabe gemäß der gerade geltenden Fahrprogrammnummer des einen oder des anderen Motorelements angesteuert.

Besonders eignet sich für einen Linearantrieb der hier beschriebenen Art, und zwar sowohl mit Konstantleistungs-Motorelementen und/oder einer Fahrprogrammsteuerung oder ohne diese Merkmale, eine Leistungszuführeinheit mit Einphasenstellern gemäß der nicht vorveröffentlichten DE—A—33 31 951 der Anmelderin.

Bei einer bevorzugten Ausführungsform der Erfindung weisen die Motorelemente je eine Mindestanzahl Statorelemente auf. Besonders bevorzugt ist es auch, die den einzelenen Motorelementen je zugeordneten Energiezuführungseinheiten mittels an den Fahrwegen angeordneter, durch das jeweiligen Fahrweg gehörige Fahrzeug beeinflußbarer Sensoreinrichtungen einzeln ein- und auszuschalten.

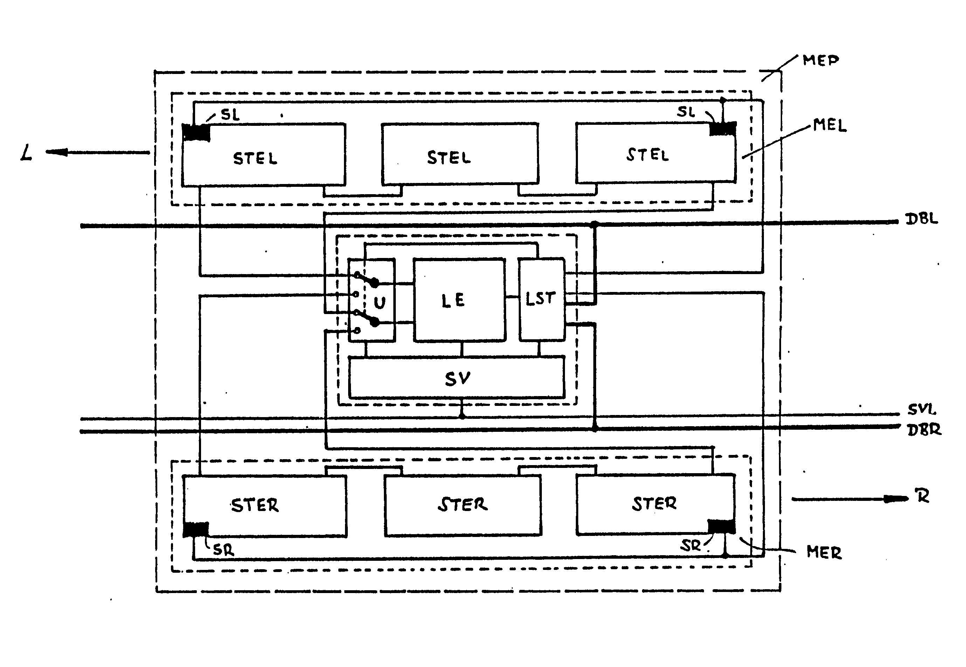

Die Erfindung und Weiterbildungen der Erfindung werden nun anhand einer Ausführungsform unter Bezugnahme auf die beiliegende Zeichnung näher erläutert.

Diese Zeichnung zeigt ein Motorelementepaar MEP mit einem Motorelement MEL und einem Motorelement MER. Das Motorelement MEL gehört zu einem Stator, der einen Fahrweg für sich in Linksrichtung L bewegende Fahrzeuge bildet, während das Motorelement MER zu einem Stator gehört, der einen Fahrweg für sich in Rechtsrichtung R bewegende Fahrzeuge bildet.

Der Begriff Fahrzeug soll hier auch einen aus mehreren Fahrzeugen zusammengesetzten Zug umfassen.

An das in der Figur gezeigte Motorlementepaar MEP schließen sich sowohl auf der linken als auch auf der rechten Seite weitere Motorelementepaare an.

Bei der dargestellten Ausführungsform weisen die beiden Motorelemente MEL und MER je drei Statorelemente STEL bzw. STER auf. Bei jedem dieser Motorelemente sind den beiden äußeren Statorelementen je ein Sensor SL bzw. SR zugeordnet, vorzugsweise eine Hallsonde, die mit Steuermagneten am jeweiligen Fahrzeug zusammenwirkt, wie dies in der DE—A—30 42 497 erläutert ist.

Gleichphasige Stromleiter der Statorelemente eines Motorelements sind in Reihe geschaltet und über eine Umschalter U an eine Leistungszuführeinheit LE anschaltbar. Der Umschalter U ist zwar mit beweglichen Schaltkontakten dargestellt, wird bei praktischen Ausführungsformen jedoch vorzugsweise als elektronischer Schalter, insbesondere Halbleiterschalter, ausgebildet. Bei den üblichen mehrphasigen Betriebssystemen ist der Umschalter U zum Umschalten aller Phasen zwischen den beiden Motorelementen ausgerüstet. Mit Hilfe des Umschalters U wird die Leistungszuführeinheit LE entweder an das linke Motorelement MEL oder das rechte Motorelement MER angeschaltet.

Das Ein- und Ausschalten der Leistungszuführungseinheit LE und die Stärke der von der Leistungszuführungseinheit LE abgegebenen Leistung wird mit Hilfe einer Leistungssteuerungseinrichtung LST gesteuert, an die die Leistungszuführungseinheit LE angeschlossen ist. Bei der dargestellten Ausführungsform übernimmt die Leistungssteuerungseinheit LST auch das Umschalten des Umschalters U. Die Leistungssteuerungseinheit weist zwei Eingangsleitungspaare auf, von denen ein Paar mit den Sonden SL bzw. SR der beiden Motorelemente MEL und das andere mit einem linken Datenbus DBL bzw. einem rechten Datenbus DBR verbunden ist. Über die Verbindungen mit den Sonden SL und SR erhält die Leistungssteuerungseinheit LST einerseits die Information, daß ein Fahrzeug in ein Motorelement eingelaufen ist und andererseits Information über die Istgeschwindigkeit dieses Fahrzeugs. Über die Datenbusleitungen DBL und DBR erhält die Leistungssteuerungseinheit LST Fahrprogramminformation, beispielsweise die für ein ausgewähltes Fahrprofil erforderlichen Fahrprogrammnummern für die Motorelemente.

Der Umschalter, die Leistungszuführungseinheit LE und die Leistungssteuerungseinheit LST werden über eine Stromversorgungseinheit SV versorgt, die an eine Stromversorgungsleitung SVL angeschlossen ist.

Der neue Linearantrieb arbeitet hinsichtlich der Anschaltung der Leistungszuführungseinheiten LE folgendermaßen:

Läuft ein Fahrzeug, das sich beispielsweise in Rechtsrichtung R bewegt, in das Motorelement MER ein, wird dies der Leistungssteuerungseinheit LST von der in der Zeichnung links unten angedeuteten Sonde SR gemeldet. Die Leistungssteuerungseinheit LST bewirkt daraufhin, daß die Leistungszuführungseinheit LE eingeschaltet und deren Ausgang über den Umschalter U an das Rechtsrichtung-Motorelement MER angeschaltet wird. Die Stärke der an das Motorelement MER abgegebenen Leistung hängt von der Sollgeschwindigkeit ab, welche mit Hilfe der Leistungssteuerungseinheit LST in Abhängigkeit von den über den Rechtsrichtung-Datenbus DBR erhaltenen Fahrprogramminformationen erzielt werden soll. Bei der zuvor erwähnten Fahrprogrammnummernsteuerung hängt diese von der Leistungssteuerungseinheit LE abgegebene Leistung davon ab, welche Rechtsrichtung-Fahrprogammnummer in dem für die Rechtsrichtung R vorgesehenen Speicher in der Leistungssteuerungseinheit LST gerade angesteuert worden ist.

Das Verlassen dieses Motorelements MER durch das Fahrzeug wird von der in der Figur rechts unten angedeuteten Sonde SR festgestellt und bewirkt über die Leistungssteuerungseinheit LST, daß die Leistungszuführungseinheit LE wieder ausgeschaltet wird. Da ein einzelnes Motorelement normalerweise kurz im Vergleich zu dem darüberfahrenden Fahrzeug bzw. Zug ist, wird das Motorelement ausschließlich während derjenigen Zeit mit Leistung versorgt, in der es dem Fahrzeug einen Vorschub vermitteln muß.

Läuft nun gleichzeitig in die beiden Motorelemente MEL und MER des Motorelementepaares MEP je ein Fahrzeug ein, was der Leistungssteuerungseinrichtung LST über die Sensoren SL und SR gemeldet wird, wird die Leistungszuführungseinheit LE mit Hilfe des Umschalters U an eines der beiden Motorelemente MEL und MER angeschaltet, und zwar ausschließlich oder alternierend. Bei ausschließlichem Anschluß an eines der beiden Motorelemente MEL und MER kann man entweder von vornherein festlegen, welches dieser beiden Motorelemente in einem solchen Fall mit der Leistung von der Leistungszuführungseinheit LE beaufschlagt wird. Beispielsweise wird man bei geneigter Fahrstrecke dasjenige Motorelement an die Leistungszuführungseinheit LE anschalten, das zu dem ansteigenden Fahrweg gehört. Alternativ kann man immer dasjenige Motorelement an die Leistungszuführungseinheit LE anschließen, in dem die größere Abweichung der Istgeschwindigkeit des sich über das Motorelement bewegenden Fahrzeugs von dessen Sollgeschwindigkeit festgestellt wird.

In der Figur ist pro Fahrweg nur eine Reihe von Statorelementen dargestellt. In Wirklichkeit werden vorzugsweise pro Fahrweg zwei nebeneinanderliegende Reihen von Statorelementen verwendet. Zur einfacheren Darstellung ist dies in der Figur nicht gezeigt.

**Patentansprüche**

1. Elektromagnetischer Linearantrieb, mit einem ersten Stator, der einen Fahrweg für eine erste Fahrrichtung bildet, und einem zweiten Stator, der im wesentlichen parallel zum ersten Stator verläuft und einen Fahrweg für die Gegenrichtung bildet, wobei jeder der beiden Statoren mit Stromleitern bestückt ist, und mit einem dem ersten Stator zugeordneten, ein erstes Fahrzeug bildenden ersten Läufer und einem dem zweiten Stator zugeordneten, ein zweites Fahrzeug bildenden zweiten Läufer, wobei jeder Stator in eine Anzahl Motorelemente (MEL, MER) unterteilt ist und den einzelnen Motorelementen individuelle Energiezuführeinheiten (LE) zugeordnet sind, die einzeln ein- und ausschaltbar sind, und wobei jede Energiezuführeinheit (LE) einem Motorelement (MEL) des einen und dem gegenüberliegenden Motorelement (MER) des anderen Fahrwegs zugeordnet und bedarfsweise an das Motorelement (MEL) des einen oder an das Motorelement (MER) des anderen Fahrwegs anschaltbar ist, gekennzeichnet durch eine Leistungssteuerungseinrichtung (LST), durch die dann, wenn sich über beiden einer Energiezuführeinheit (LE) zugeordneten Motorelementen (MEL, MER) je ein Fahrzeug befindet, eine nach vorbestimmten Kriterien vorzunehmende Anschaltung der gemeinsamen Energiezuführeinheit (LE) an jeweils eines der beiden Motorelemente (MEL, MER) durchgeführt wird während das andere Motorelement abgeschaltet ist.

2. Elektromagnetischer Linearantrieb nach Anspruch 1, dadurch gekennzeichnet, daß die Leistungssteuerungseinrichtung so ausgebildet ist, daß dann, wenn sich über beiden einer Energiezuführeinheit (LE) zugeordneten Motorelementen (MEL, MER) je ein Fahrzeug befindet, die gemeinsame Energiezuführeinheit (LE) an dasjenige der beiden Motorelemente (MEL, MER) angeschaltet wird, bei dem die Geschwindigkeitsabweichung des zugehörigen Fahrzeugs von der Sollgeschwindigkeit größer ist.

3. Elektromagnetischer Linearantrieb nach Anspruch 2, dadurch gekennzeichnet, daß jedem Motorelemente (MEL, MER) eine Sollgeschwindigkeits-Istgeschwindigkeits-Vergleicheinrichtung zur Ermittlung der Abweichung der Istgeschwindigkeit des zugehörigen Fahrzeugs von dessen Sollgeschwindigkeit zugeordnet ist, daß jeder Energiezuführeinheit (LE) eine die Geschwindigkeitsabweichungen der beiden ihr zugeordneten Motorelemente (MEL, MER) vergleichende Abweichungsvergleichseinrichtung angeordent ist, und daß jeder Energiezuführeinheit (LE) eine Umschaltsteuereinrichtung zugeordnet ist, die dann, wenn sich über beiden einer Energiezuführeinheit (LE) zugeordneten Motorelementen (MEL, MER) je ein Fahrzeug befindet, die Energiezuführeinheit (LE) an das Motorelement (MEL, MER) mit der größeren Geschwindigkeitsabweichung anschaltet.

4. Elektromagnetischer Linearantrieb nach Anspruch 1, dadurch gekennzeichnet, daß dann, wenn sich über beiden einer Energiezuführeinheit (LE) zugeordneten Motorelementen (MEL, MER) je ein Fahrzeug befindet, eine alternierende Hin- und Herschaltung der gemeinsamen Energiezuführeinheit (LE) zwischen beiden Motorelementen (MEL, MER) durchgeführt wird.

5. Elektromagnetischer Linearantrieb, mit einem ersten Stator, der einen Fahrweg für eine erste Fahrrichtung bildet, und einem zweiten Stator, der im wesentlichen parallel zum ersten Stator verläuft und einen Fahrweg für die Gegenrichtung bildet, wobei jeder der beiden Statoren mit Stromleitern bestückt ist und mit einem dem ersten Stator zugeordneten, ein erstes Fahrzeug bildenden ersten Läufer und einem dem zweiten Stator zugeordneten, ein zweites Fahrzeug bildenden zweiten Läufer, wobei jeder Stator in eine Anzahl Motorelemente (MEL, MER) unterteilt ist und den einzelnen Motorelementen individuelle Energiezuführeinheiten (LE) zugeordnet sind, die einzeln ein- und ausschaltbar sind, und wobei jede Energiezuführeinheit (LE) einem Motorelement (MEL) des einen und dem gegenüberliegenden Motorelement (MER) des anderen Fahrwegs zugeordnet und bedarfsweise an das Motorelement (MEL) des einen oder an das Motorelement (MER) des anderen Fahrwegs anschaltbar ist, gekennzeichnet durch eine Leistungssteuerungseinrichtung (LST), durch die dann, wenn sich über beiden einer Energiezuführeinheit (LE) zugeordneten Motorelementen (MEL, MER) je ein Fahrzeug befindet, keines der beiden Motorelemente dieses Motorelementenpaares an die Energiezuführeinheit (LE) angeschaltet wird.

6. Elektromagnetischer Linearantrieb nach einem oder mehreren der Ansprüche 1 bis 5, dadurch gekennzeichnet, daß vorzugsweise alle, mindestens die beiden einer gemeinsamen Energiezuführeinheit (LE) zugeordneten Motorelemente (MEL, MER) für die gleiche Maximalleistung ausgelegt sind.

**Revendications**

1. Entraînement électromagnétique linéaire comportant un premier stator qui forme un parcours pour un premier sens de marche, et un deuxième stator qui est à peu près parallèle au premier stator et qui forme un parcours pour le sens inverse, chacun des deux stators étant équipé de conducteurs de courant, et comportant un premier rotor associé au premier stator formant un premier véhicule, et un deuxième rotor associé au deuxième stator formant un deuxième véhicule, chaque stator étant subdivisé en un certain nombre d'éléments moteurs (MEL, MER) et des unités d'alimentation en énergie (LE) individuelles étant associées aux différents éléments moteurs et pouvant être mises sous tension et hors tension séparément, et chaque unité d'alimentation en énergie (LE) étant associée à un élément moteur (MEL) d'un parcours et à l'élément moteur (MER) opposé de l'autre parcours, et pouvant, au besoin, être raccordée à l'élément moteur (MEL) d'un parcours ou de l'élément moteur (MER) de l'autre parcours, caractérisé par un dispositif de commande de puissance (LST) par lequel un raccordement de l'unité d'alimentation en énergie (LE) commune à chacun des deux éléments moteurs (MEL, MER) doit être effectué, selon des critères prédéterminés, tandis que l'autre élément moteur est coupé, lorsqu'un véhicule se trouve au-dessus de chacun des deux éléments moteurs (MEL, MER) associés à une unité d'alimentation en énergie (LE).

2. Entraînement électromagnétique linéaire selon la revendication 1, caractérisé en ce que le dispositif de commande de puissance est conçu de manière que l'unité d'alimentation en énergie (LE) commune est raccordée à celui des deux éléments moteurs (MEL, MER) pour lequel l'écart de vitesse du véhicule correspondant est plus grand par rapport à la vitesse de consigne, lorsqu'un véhicule se trouve au-dessus de chacun des deux éléments moteurs (MEL, MER) associés à une unité d'alimentation en énergie (LE).

3. Entraînement électromagnétique linéaire selon la revendication 2, caractérisé en ce qu'un dispositif de comparaison de la vitesse de consigne et de la vitesse réelle est associé à chaque élément moteur (MEL, MER), pour déterminer l'écart de la vitesse réelle du véhicule correspondant par rapport à la vitesse de consigne, en ce qu'un dispositif de comparaison d'écart qui compare les écarts de vitesse des deux éléments moteurs (MEL, MER) associés, est associé à chaque unité d'alimentation en énergie (LE), et en ce qu'un dispositif de commande de commutation qui raccorde avec l'écart de vitesse le plus grand l'unité d'alimentation en énergie (LE) à l'élément moteur (MEL, MER), lorsqu'un véhicule se trouve au-dessus de chacun des deux éléments moteurs (MEL, MER) associés à une unité d'alimentation en énergie (LE), est associé à chaque unité d'alimentation en énergie (LE).

4. Entraînement électromagnétique linéaire selon la revendication 1, caractérisé en ce que l'unité d'alimentation en énergie (LE) commune est alternativement raccordée dans un mouvement de va-et-vient aux deux éléments moteurs (MEL, MER), lorsqu'un véhicule se trouve au-dessus de chacun des deux éléments moteurs (MEL, MER) associés à une unité d'alimentation en énergie (LE).

5. Entraînement électromagnétique linéaire comportant un premier stator qui forme un parcours pour un premier sens de marche, et un deuxième stator qui est à peu près parallèle au premier stator et qui forme un parcours pour le sens inverse, chacun des deux stators étant équipé de conducteurs de courant, et comportant un premier rotor associé au premier stator formant un premier véhicule, et un deuxième rotor associé au deuxième stator formant un deuxième véhicule, chaque stator étant subdivisé en un certain nombre d'éléments moteurs (MEL, MER) et des unités d'alimentation en énergie (LE) individuelles étant associées aux différents éléments moteurs et pouvant être mises sous tension et hors tension séparément, et chaque unité d'alimentation en énergie (LE) étant associée à un élément moteur (MEL) de l'un des parcours et à l'élément moteur (MER) opposé de l'autre parcours, et pouvant, au besoin, être raccordée à l'élément moteur (MEL) de l'un des parcours ou à l'élément moteur (MER) de l'autre parcours, caractérisé par un dispositif de commande de puissance (LST) par lequel aucun des deux éléments moteurs de ce couple d'éléments moteurs n'est raccordé à l'unité d'alimentation en énergie (LE), lorsqu'un véhicule se trouve au-dessus de chacun des deux éléments moteurs (MEL, MER) associés à une unité d'alimentation en énergie (LE).

6. Entraînement électromagnétique linéaire selon une ou plusieurs des revendications 1 à 5, caractérisé en ce que de préférence, tous les éléments moteurs (MEL, MER), au moins les deux éléments moteurs (MEL, MER) associés à une unité d'alimentation en énergie (LE) commune, sont conçus pour la même puissance maximale.

**Claims**

1. Electromagnetic linear drive with a first stator which forms a travel path for a first direction of travel and a second stator which extends substantially parallelly to the first stator and forms a travel path for the opposite direction, wherein each of both the stators is equipped with current conductors, and with a first rotor, which forms a first vehicle and is associated with the first stator, and a second rotor which forms a second vehicle and is associated with the second stator, wherein each stator is subdivided into a number of motor elements (MEL, MER) and individual energy supply units (LE), which are switchable on and off individually, are associated with the individual motor elements and wherein each energy supply unit (LE) is associated with a motor element (MEL) of the one travel path and the oppositely disposed motor element (MER) of the other travel path and is switchable in case of need to the motor element (MEL) of the one travel path or to the motor element (MER) of the other travel path, characterised by a power control equipment (LST), by which—when a respective vehicle is situated above both motor elements (MEL, MER) associated with one energy supply unit (LE)—a switching-on, to be undertaken according to predetermined criteria, of the common energy supply unit (LE) to one of both the motor elements (MEL, MER) is performed, whilst the respective other motor element is switched off.

2. Electromagnetic linear drive according to claim 1, characterised thereby, that the power control equipment is so constructed that—when a respective vehicle is situated above both motor elements (MEL, MER) associated with one energy supply unit (LE)—the common energy supply unit (LE) is switched to that one of both the motor elements (MEL, MER), for which the speed deviation of the associated vehicle from the target speed is the greater.

3. Electromagnetic linear drive according to claim 2, characterised thereby, that each motor element (MEL, MER) is associated with a target speed and actual speed comparison equipment for ascertaining the deviation of the actual speed of the associated vehicle from its target speed, that each energy supply unit (LE) is associated with a deviation comparison equipment comparing the speed deviations of both the motor elements (MEL, MER) associated with it and that each energy supply unit (LE) is associated with a changeover switch control equipment which—when a respective vehicle is situated above both motor elements (MEL, MER) associated with one energy supply unit (LE)—switches the energy supply unit (LE) to the motor element (MEL, MER) with the greater speed deviation.

4. Electromagnetic linear drive according to claim 1, characterised thereby, that—when a respective vehicle is situated above both motor elements (MEL, MER) associated with one energy supply unit (LE)—an alternating switching to and fro of the common energy supply unit (LE) between both motor elements (MEL, MER) is performed.

5. Electromagnetic linear drive with a first stator which forms a travel path for a first direction of travel and a second stator which extends substantially parallelly to the first stator and forms a travel path for the opposite direction, wherein each of both the stators is equipped with current conductors, and with a first rotor, which forms a first vehicle and is associated with the first stator, and a second rotor which forms a second vehicle and is associated with the second stator, wherein each stator is subdivided into a number of motor elements (MEL, MER) and individual energy supply units (LE), which are switchable on and off individually, are associated with the individual motor elements and wherein each energy supply unit (LE) is associated with a motor element (MEL) of the one travel path and the oppositely disposed motor element (MER) of the other travel path and is switchable in case of need to the motor element (MEL) of the one travel path or to the motor element (MER) of the other travel path, characterised by a power control equipment (LST), by which—when a respective vehicle is situated above both motor elements (MEL, MER) associated with one energy supply unit (LE)—neither of both the motor elements of this motor element pair is switched to the energy supply unit (LE).

6. Electromagnetic linear drive according to one or more of the claims 1 to 5, characterised thereby, that preferably all, but at least both the motor elements (MEL, MER) associated with a common energy supply unit (LE) are designed for the same maximum power.